# EUROPEAN PATENT APPLICATION

(11) **EP 2 107 444 A1**
(43) Date of publication of application: **07.10.2009**
(21) Application number: 08075275.1
(22) Date of filing: 03.04.2008
(51) Int. Cl.: G06F 1/18

(54) **Enclosure for a computer**

(71) Applicant: Maes, Robbert Matthias, 1751 LJ Schagerbrug (NL)
(72) Inventor: Maes, Robbert Matthias, 1751 LJ Schagerbrug (NL)
(74) Representative: Riemens, Roelof Harm

(57) **Abstract**

Enclosure (1) for a computer, intended for accommodating a computer mainframe, at least comprising top (4a), bottom (4b), front (2a), back (2b) and side walls (3a,3b), wherein at least one of the side walls (3a) comprises grip means (5) for manually lifting and carrying said computer.

## Description

The present invention relates to an enclosure for a desktop computer, intended for accommodating a computer mainframe, at least comprising top, bottom, front, back and side walls.

Many types of computers are known at present ranging from portable laptops to the heavy so called desktop computers. Especially at home said desktop computers are most frequently used. Despite the name desktop computer these bulky contraptions are usually not positioned on top of a desk, but underneath. These computers are relatively heavy and usually very difficult to move around let alone lift and carry by hand. They are very difficult to grab by hand. When certain peripheral appliances are to be connected to the computer or something inside the computer needs to be added or changed it is quite cumbersome to manipulate such a heavy and bulky desktop computer. It is clear that any sudden motion or impact of computers should be prevented at any cost, let alone dropping a computer.

In the present specification a desktop computer is in particular intended to mean the substantially vertically oriented pc mostly found in private and business environment. Such computers usually have substantially rectangular dimensions. The side walls are usually bigger than the front and back walls, and also bigger than the top and bottom walls. Usually the side walls are more or less rectangular in shape and frequently more or less square in shape. The front, back, top and bottom are usually of a similar size and shape.

In view of the above a need exists for providing desktop computers which are easier to lift, to carry or otherwise manipulated by hand; which can easily be moved around and are therefore easy to orientate for maintenance and the like.

The object of the invention is to provide a solution for the above need. Therefore the invention provides an enclosure for a desktop computer, intended for accommodating a computer mainframe, at least comprising top, bottom, front, back and side walls **characterized in that** at least one of the side walls comprises grip means for manually lifting and carrying said computer.

The grip means provide an easy and unambiguous means for grabbing the computer by hand for lifting, carrying and manipulating the same. In particular the grip means are provided in the side wall below the top.

It will be clear that the shape of the desktop computer is not specifically limited to the shape described earlier as many other shapes of desktop computers are feasible and for which grip means may even be more advantageous to use.

Preferably the grip means are flush with the respective side wall. Thus there are no protruding parts in the side walls, reducing the space the computer occupies, but also preventing accidental contact with the grip means. Also the aesthetical appearance is improved.

Advantageously the grip means are designed as one or more apertures. Such apertures are very easy to manufacture. It will be clear that the apertures will be positioned such that one cannot touch electrical components inside the enclosure when carrying the computer by hand with the fingers in the respective apertures.

More preferable the apertures are provided with grip boxes which have a box opening connected to the environment, to provide a confined grip cavity. The presence of grip boxes prevents any access to the inside of the computer as it is completely shielded by said boxes.

In a preferred embodiment the grip boxes are designed such that the boxes provide a cavity with a grip edge located at the upper part of the box opening in the side wall to improve grip. This embodiment provides an improved and secure grip because the fingers can hook behind said edge. This and other embodiments will be further illustrated in the description of the drawing.

Specifically the grip means are designed as suitably shaped indentations. In this case the grip means are comprised of the same material as the rest of the side walls.

The grip means can be positioned virtually anywhere in the side walls, but preferably they are positioned vertically substantially above the point of gravity of the computer. This provides a relatively stable grip when lifting the computer as it will not tilt.

In a further aspect the invention further provides a side wall for a computer enclosure, comprising grip means according to the invention.

Finally the invention provides a computer comprising an enclosure according to the invention.

Apart from the presence of grip means in the side walls the enclosure according to the invention may in addition comprise grip means in any of the other walls thereof, even in the bottom wall.

Further the number of grip means in any of the walls is not limited and can be selected depending on the specific shape, dimensions, weight etc. of the enclosure and computer.

In the present specification horizontal and vertical are intended to mean horizontal and vertical with respect to the field of gravity.

In the following the invention will be described in further detail with reference to the enclosed drawing, wherein:
Fig.1 is a schematic perspective view of a desktop computer according to the prior art;
Fig.2 is a schematic perspective view of a desktop computer according to the invention comprising grip means in the side walls;
Fig.3 is a schematic cross section of an embodiment of the grip means in the form of one or more apertures;
Fig.4 is a schematic cross section of an embodiment of the grip means in the form of an aperture provided with a grip box;
Fig.5 is a schematic cross section of an embodiment of the grip means in the form of an aperture provided with a grip box comprising an upper grip edge;
Fig.6 is a schematic cross section of an embodiment of the grip means in the form of an aperture provided with a grip box with a horizontal grip bar;
Fig.7 is a schematic cross section of an embodiment of the grip means in the form of an indentation;
Fig.8a is a schematic cross section of an embodiment of the grip means in the form of an aperture provided with a grip box and a swing handle in a neutral starting position;
Fig.8b is a schematic cross section of the embodiment of the grip means according to fig.8a in an unfolded position; and
Fig.8c is a perspective view of the embodiment depicted in fig.8b.

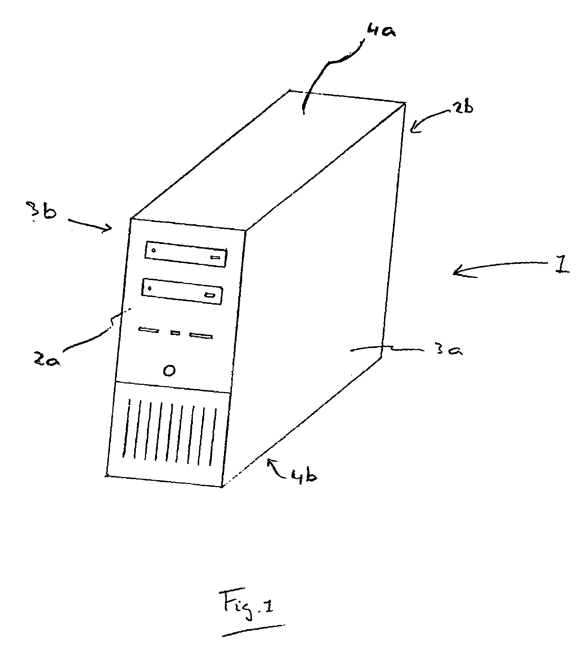

Fig 1 shows a schematic perspective view of a desktop computer according to the prior art with a computer enclosure 1. This computer enclosure 1 comprises a front wall 2a and a back wall 2b (not visible), a side wall 3a and a side wall 3b (not visible), and a top wall 4a and a bottom wall 4b (not visible). In the front wall 2a schematic representations of different peripheral devices, like CD and DVD drives, card readers, USB-ports etc are shown. Usually the more permanent connectors for printers, monitors and the like are provided in the back wall 2b.

The computer shown is a typical desktop PC for which the present invention is particularly suitable. This is the configuration and shape that is most frequent used in both private and business environment. Usually the side walls 3a, 3b are bigger in size than the front and back walls 2a, 2b, and also bigger than the top and bottom walls 4a, 4b. Usually the side walls 3a, 3b have a more or less rectangular, and frequently more or less square shape and size. The front, back, top and bottom walls are usually similar in size. This shape of the computer enclosure is the shape to which the present invention particularly pertains. This is the relatively tall vertical rectangular shape when viewed from the front.

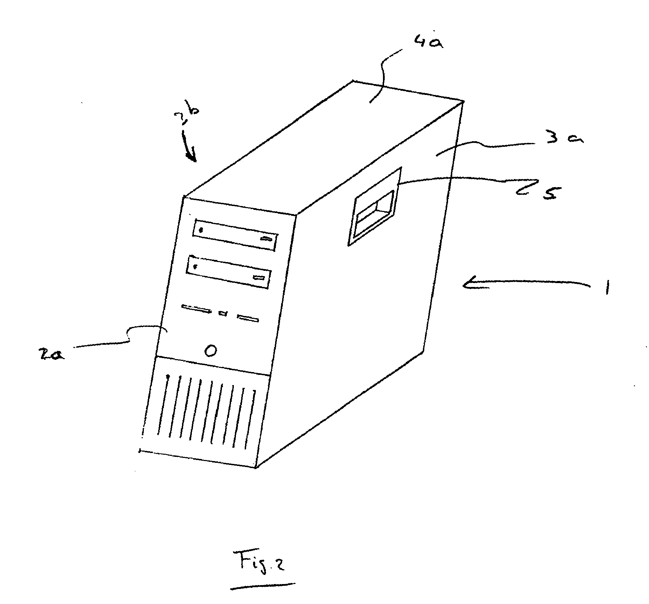

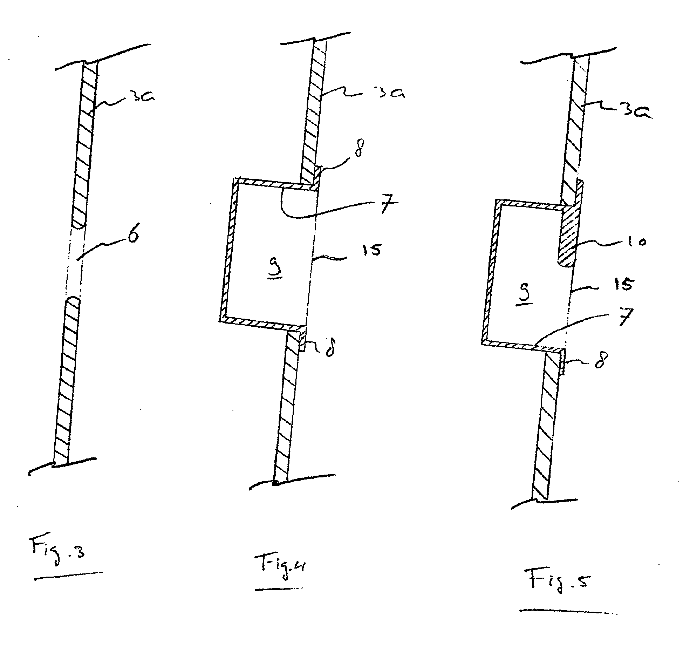

Fig.2 shows a computer enclosure 1 similar to fig.1 comprising grip means 5 in the side wall 3a. Preferably the side wall 3b is provided with similar grip means 5. The position of the grip means 5 is preferably vertically above the point of gravity of the computer. Such grip means 5 provide a secure and unambiguous grip for manually lifting, carrying or otherwise manipulating the computer. The grip means shown here in fig.2 are shown in cross section in fig.5 which will follow.

Fig.3 shows a first very simple embodiment of the present invention, wherein the grip means are in the form of a suitably shaped aperture(s) 6. Each side wall 3a, 3b can comprise one or more of such apertures, provided that these apertures can be used to lift, carry or otherwise manipulate the computer by hand. The shape is also not specifically limited.

Advantageously the apertures 6 are positioned and designed such that a user who puts his finger(s) in the aperture(s) 6 can not touch any of the dangerous or delicate electronic/mechanic components inside the enclosure 1.

Preferably however the aperture is provided with a so called grip box 7 which prevents any access to the inside of the enclosure 1. Such grip boxes 7 are in particular substantially flush with the respective side wall 3a, 3b.

In this embodiment the grip box 7 defines a confined cavity 9 which is connected to the environment by a box opening 15. Further the grip box 7 has a circumferential flange 8 for easy and secure attachment to the side wall 3a.

An improvement of the previous embodiment is shown in fig.5. Here the grip box 7 is provided with an upper grip edge 10 for improving the grip when the hand of a user is inside the grip box cavity 9. The fingers of a user can hook behind the upper grip edge 10. This embodiment of the grip means is also shown in fig.2.

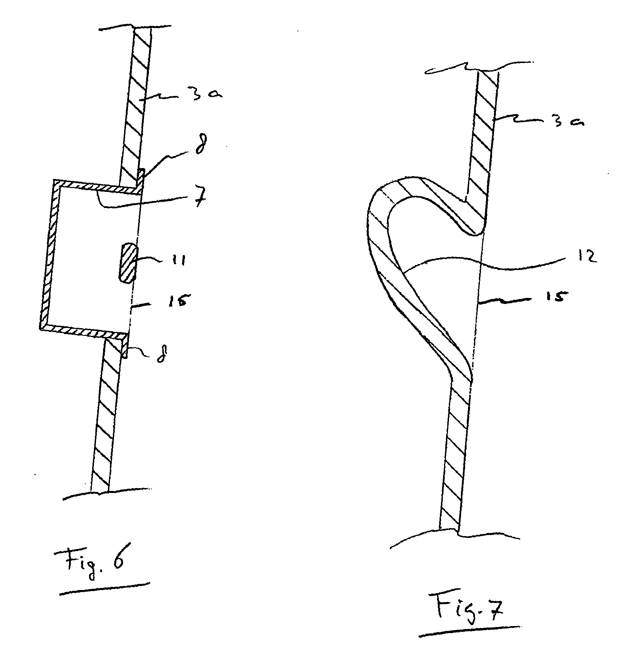

Fig.6 shows an additional embodiment based on the grip box 7 of fig.4. Here a central substantially horizontal bar 11 is present crossing the opening 15 of the grip box 7. This also is a very advantageous embodiment providing perfect grip by hand.

Instead of providing an aperture 6 in the side walls in a separate operation and thereafter inserting grip boxes 7 it is also possible to manufacture the grip means of the same material as the side walls themselves. In fig.7 an embodiment of such grip means is disclosed comprising a suitably shaped indentation 12. Clearly the shape is not specifically limited as long as the indentation provides sufficient grip to serve the purpose according to the invention, i.e. to at least be able as a user to lift the computer manually by gripping the indentation by hand.

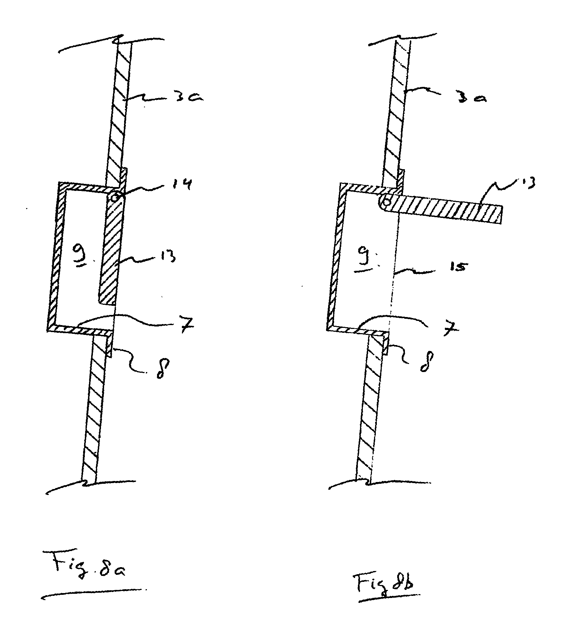

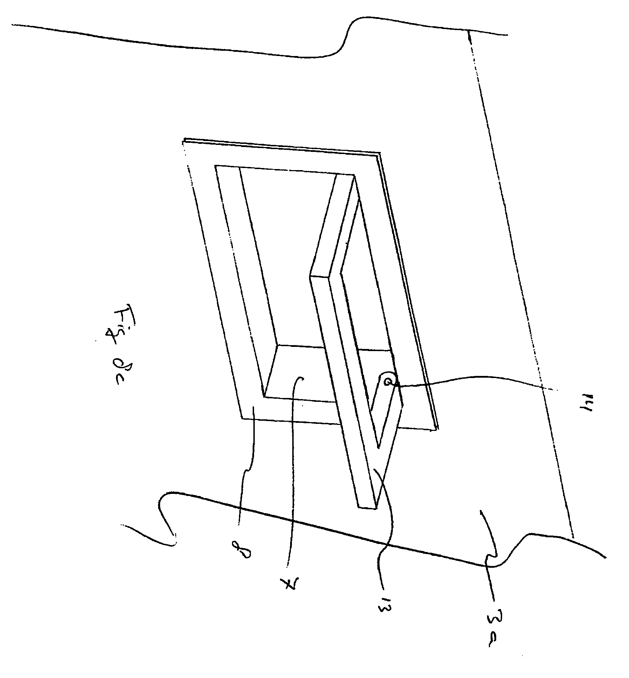

Fig.8a-8c show an embodiment of the grip means in the form of a swing handle 13 in different positions. Fig.8a shows the handle 13 in a neutral position retained in the grip box cavity 9. The handle 13 can swing in an unfolded position as shown in fig.8b. Finally the position shown in fig.8b is also illustrated in a perspective view in fig.8c. The handle 13 can pivot around an axis 14. A similar axis is present at the opposite side of the cavity 9 where the other end of the handle 13 can pivot.

Spring means may be present to urge the handle 13 back into the neutral position after use.

Finally it is noted that although with reference to the drawing the grip means according to the invention are provided as apertures optionally being provided with grip boxes, substantially flush with the respective side walls, the invention is not limited to these embodiments. Of course it is also possible to attach grip means on the outside of the side walls and possibly any other wall. Such grip means are not limited in dimensions and/or shape as long as they can serve the purpose according to the invention.

## Claims

1. Enclosure (1) for a computer, intended for accommodating a computer mainframe, at least comprising top (4a), bottom (4b), front (2a), back (2b) and side walls (3a,3b), **characterized in that** at least one of the side walls (3a) comprises grip means (5) for manually lifting and carrying said computer.

2. Enclosure (1) according to claim 1, **characterized in that** the grip means are flush with the respective side wall (3a, 3b).

3. Enclosure (1) according to claim 1 or 2, **characterized in that** the grip means are designed as one or more apertures (6).

4. Enclosure (1) according to claim 3, **characterized in that** the apertures are provided with grip boxes (7) which have a box opening (15) connected to the environment, to provide a confined grip cavity (9).

5. Enclosure (1) according to claim 4, **characterized in that** the grip boxes (7) are designed such that the boxes (7) provide a cavity (9) with an edge (10) located at the upper part of the box opening (15) in the side wall (3a,3b) to improve grip.

6. Enclosure (1) according to one or more of claims 1-5, **characterized in that** the grip means are designed as suitably shaped indentations (12).

7. Enclosure (1) according to one or more of claims 1-6, **characterized in that** the grip means are positioned vertically substantially above the point of gravity of the computer.

8. Side wall (3a, 3b) for a computer enclosure (1), comprising grip means (5) as defined in one or more of the preceding claims.

9. Computer comprising an enclosure (1) according to one or more of claims 1-7.
